# DEMANDE DE BREVET EUROPEEN

(11) **EP 1 439 308 A1**
(43) Date de publication de la demande: **21.07.2004**
(21) Numéro de dépôt: 04290104.1
(22) Date de dépôt: 15.01.2004
(51) Int. Cl.: F04D 29/56, F04D 29/02, F01D 17/16, F01D 5/28

(54) **Dispositif anti-usure pour système de calage variable d'aube de turbomachine**

(30) Priorité: 16.01.2003 FR 0300435
(71) Demandeur: SNECMA MOTEURS, 75015 Paris (FR)
(72) Inventeur: Perruchaut, Philippe, 94140 Alfortville (FR); Piekosz, Christian, 91540 Mennecy (FR)
(74) Mandataire: David, Alain

(57) **Abrégé**

Une biellette flexible (20) est articulée à une première extrémité sur un anneau de commande et est fixée à une deuxième extrémité sur un pivot (12) d'une aube à commander pouvant tourner à l'intérieur d'un palier lisse traversant une partie de corps (18) d'une turbomachine. Une bague d'insert (50a, 50b) constituée d'un matériau métallique à base nickel ou cobalt est frettée sur le pivot d'aube et le palier lisse (52a, 52b) est constitué d'un matériau céramique.

## Description

### Domaine de l'invention

La présente invention concerne la commande d'aubes à angle de calage variable. Elle trouve une application particulière dans le domaine de l'aéronautique, notamment pour la commande des positions angulaires d'aubes directrices d'entrée d'air dans des compresseurs de turbomachines, telles que des turboréacteurs ou turbopropulseurs d'avions.

### Arrière-plan de l'invention

Les dispositifs connus pour la commande d'aubes à calage variable dans une turbomachine comportent habituellement un organe de commande sous forme d'un anneau entourant un carter de la turbomachine et une pluralité de leviers, ou biellettes, chaque biellette ayant une première extrémité reliée à l'anneau de commande par une articulation et une deuxième extrémité montée sur un pivot d'une aube respective.

La modification synchronisée de la position angulaire des aubes est réalisée par rotation de l'anneau autour de l'axe de la turbomachine. Afin de pouvoir suivre le mouvement de rotation de l'anneau, la liaison entre chaque biellette et l'anneau comprend au moins un degré de liberté en rotation autour d'un axe dirigé sensiblement radialement par rapport à l'anneau. Toutefois, la biellette étant montée rigidement sur le pivot de l'aube correspondante, la rotation de l'anneau induit d'autres mouvements relatifs entre l'anneau et la partie de la biellette montée sur le pivot de l'aube.

Afin de s'accommoder de ces mouvements supplémentaires, ou d'au moins une partie d'entre eux, il est bien connu de réaliser la liaison sous forme d'une rotule ou d'une pièce analogue qui, outre la rotation autour d'un axe sensiblement radial par rapport à l'anneau, autorise une rotation autour d'un axe ayant une direction sensiblement circonférentielle par rapport à l'anneau. Toutefois, l'utilisation d'articulations de type rotule ou analogue dans un dispositif de commande d'un ensemble d'aubes, ou, simultanément, de plusieurs ensembles d'aubes, nécessitant la réalisation d'un grand nombre de pièces pour un coût relativement élevé, la demanderesse a proposé dans sa demande de brevet française FR 2,814,206 de réaliser une biellette en structure lamifiée dont la capacité de déformation élastique en flexion et torsion permet d'assurer une souplesse suffisante pour ne pas entraver la transmission de mouvement entre l'anneau de commande et les aubes, tout en conservant une épaisseur de biellette suffisante pour résister à la fatigue et éviter le risque de flambage. De plus, dans toute la plage de fonctionnement de l'anneau de commande, il n'y a pas de variation importante de résistance à la déformation. La commande du calage des aubes est donc précise et aisée.

Cette réalisation donne donc toute satisfaction. Toutefois, dans certaines conditions d'utilisation extrême qui dépendent de la température de fonctionnement, de la pression de contact, de l'amplitude des mouvements ou encore de l'environnement, les sollicitations sur les articulations exposent les surfaces en contact à des dégradations de type usure pouvant altérer le fonctionnement général du dispositif, ces dégradations étant d'autant plus importantes que le dispositif évolue nécessairement en milieu sec, c'est à dire non lubrifié.

Aussi, il a été proposé dans le brevet EP 0,307,112, un palier de guidage à monter sur un pivot d'aube et constitué d'une couche tressée à plusieurs torons imprégnée de résine qui assure une auto-lubrification de l'articulation. Toutefois, ce palier présente encore malgré tout une durée de vie peu élevée.

On connaît aussi par le brevet US 6,170,990 une douille à monter sur un pivot d'aube et formée de plusieurs couches superposées de matériaux à base graphite imprégné de résine, coté frottement, et à base de fibres imprégnées de résine, coté carter. Toutefois, ces matériaux ont essentiellement une utilisation anti-corrosion galvanique et non anti-usure.

### Objet et résumé de l'invention

L'invention a pour but d'éviter les dégradations dues aux phénomènes d'usure au niveau de l'articulation du pivot d'aube dans les dispositifs de l'art antérieur, en proposant un dispositif de commande d'aube à calage variable dont la durée de fonctionnement est notablement améliorée par rapport à ces dispositifs. Un autre but de l'invention est de proposer un dispositif qui reste fonctionnel quel que soit le matériau employé pour la fabrication de l'aube.

Ces buts sont atteints grâce à un dispositif du type comportant une biellette, des moyens de liaison formant articulation entre une première extrémité de la biellette et un anneau de commande, et des moyens de fixation d'une deuxième extrémité de la biellette sur un pivot d'une aube à commander, ce pivot d'aube pouvant tourner à l'intérieur d'un palier lisse traversant une partie de corps de la turbomachine, dispositif dans lequel, conformément à l'invention, lorsque ce pivot d'aube est constitué d'un matériau métallique à base nickel ou cobalt, ledit palier lisse est constitué d'un matériau céramique.

Avec ce couple céramique/métal, la durée de vie du dispositif est grandement augmentée du fait du rôle de lubrifiant joué par les oxydes d'alliage de nickel ou de cobalt créés lors du contact continu entre le pivot de l'aube et le pallier lisse.

De préférence, le matériau céramique est de l'alumine (de préférence de l'alumine pur à au moins 97% ou mieux 99%). Ledit palier lisse peut alors être réalisé en deux parties.

Lorsque le pivot d'aube n'est pas constitué d'un matériau métallique à base nickel ou cobalt (mais par exemple formé en titane), il est prévu avantageusement une bague d'insert constituée d'un matériau métallique à base nickel ou cobalt et frettée sur ledit pivot d'aube. Cette bague d'insert peut être en deux parties.

Selon un mode de réalisation alternatif, ladite bague d'insert constituée d'un matériau métallique à base nickel ou cobalt est remplacée par un dépôt d'un matériau céramique sur ledit pivot d'aube et ledit palier lisse constitué d'un matériau céramique est remplacé par un palier lisse constitué d'un matériau métallique à base nickel ou cobalt. Le matériau céramique est avantageusement de l'alumine dont le dépôt est formé par projection plasma.

### Brève description des dessins

L'invention sera mieux comprise à la lecture de la description faite, ci-après, à titre indicatif mais non limitatif, en référence aux dessins annexés, sur lesquels :
- la figure 1 est une vue en coupe d'un dispositif de commande d'aubes à angle de calage variable conventionnel,
- la figure 2 est une vue en coupe d'un premier mode de réalisation d'un palier conforme à l'invention, et
- la figure 3 est une vue en coupe d'un premier mode de réalisation d'un palier conforme à l'invention.

### Description détaillée de modes préférentiels de réalisation

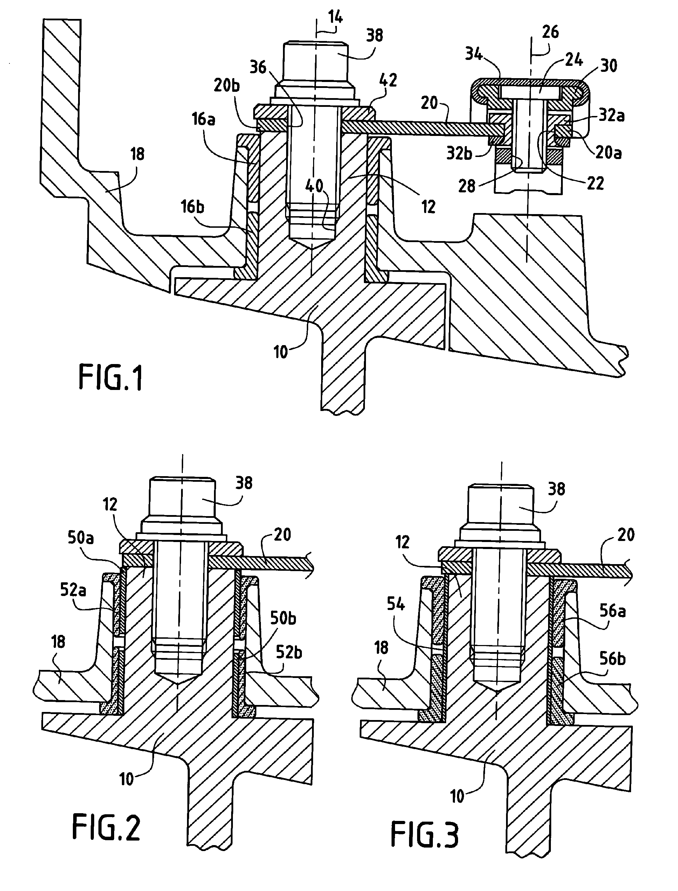

La figure 1 illustre en coupe une partie de turbomachine, turboréacteur ou turbopropulseur d'avion ou tout autre générateur de puissance terrestre ou marin, par exemple l'une des aubes directrices du type à angle de calage variable 10 réparties autour de l'axe d'une telle turbomachine et placées en entrée de compresseur.

Chaque aube 10 est munie d'un pivot d'aube 12 d'axe 14 qui peut tourner à l'intérieur d'un palier lisse défini par une bague en deux parties 16a, 16b traversant une partie de corps 18 de la turbomachine (en l'espèce une virole extérieure ou le carter du redresseur).

Le déplacement angulaire (calage) de chaque aube 10 est provoqué par une biellette flexible 20 comprenant de préférence une structure composite souple telle qu'une structure lamifiée constituée de couches métalliques minces alternant avec des couches d'élastomère, les couches adhérant les unes aux autres, comme illustrée dans la demande de brevet française N° 2 814 206 précitée. Les couches métalliques sont formées par des feuilles de métal d'épaisseur de préférence inférieure à 0,5 mm, découpées dans des feuillards ou clinquants par exemple en acier, en inox, ou tout autre métal convenant pour l'application envisagée. De même, les couches d'élastomère sont formées par exemple en caoutchouc naturel, chloroprène, butadiène, nitrile, épichlorhydrine, silicone, etc., le choix étant effectué en fonction des caractéristiques mécaniques souhaitées et des conditions d'environnement.

A une première extrémité 20a, la biellette 20 comporte un premier orifice 22 destiné à recevoir des moyens de liaison formés par un pion 24 d'axe 26 engagé dans un logement radial 28 d'un anneau de commande 30. Ce logement est avantageusement délimité par une fourrure 32 (ensemble de deux pièces serties, un manchon 32a et un anneau 32b) montée dans le premier orifice 22 formé à travers la biellette 20 et destinée d'une part à compenser le jeu entre la biellette et l'anneau de commande et d'autre part à procurer une longueur de centrage suffisante pour reprendre les efforts du pion 24. Ce pion est maintenu en position par un anneau de verrouillage 34 coulissant sur l'anneau de commande et muni de fenêtres (non représentée) de forme correspondant à celle du pion (ou plus précisément de sa tête).

A une deuxième extrémité 20b opposée à la première, la biellette 20 comporte un second orifice 36 destiné à recevoir des moyens de fixation sur le pivot de l'aube 12. Dans les exemples illustrés, cette fixation est assurée par une vis de fixation 38 engagée dans un trou borgne taraudé 40 du pivot de l'aube 12, mais tout autre mode de fixation est bien entendu envisageable. Cette biellette est rendue solidaire en rotation du pivot 12 et maintenue sans jeu dans le pivot d'aube en étant engagée par exemple dans une rainure radiale (non représentée), de largeur inférieure à celle de la biellette, pratiquée dans ce pivot et dégageant une assise pour la biellette et deux bords plats radiaux de positionnement. Une rondelle formant butée 42 est interposée entre l'extrémité 20b de la biellette et la vis de fixation 38.

L'anneau de commande 30, dont l'axe est confondu avec l'axe longitudinal de la turbomachine, est mobile en rotation autour de son axe. Il comporte par exemple une pluralité de lumières (non représentées), en nombre égal à celui des aubes, percées radialement et de largeur sensiblement supérieure à celle d'une biellette. De préférence, il est réalisé en deux parties (2 demi-anneau) couvrant chacune 180° de la circonférence de la turbomachine. Ces parties sont reliées (verrouillées) entres elles par une férule de liaison (non représentée). L'entraînement en rotation est assuré classiquement par un ou plusieurs vérins (non représentés). La rotation de l'anneau de commande permet de faire varier la positon angulaire des aubes 10 via les biellettes 20. De même, l'anneau de verrouillage 34 est formé en deux parties couvrant chacune également 180°. Un ensemble unique sur 360° est bien entendu possible selon l'architecture de la turbomachine.

Classiquement, la partie de corps 18 de la turbomachine (carter de redresseur par exemple) est réalisée en acier et les aubes, en particulier le pivot de l'aube 12, sont réalisées également en acier ou en titane par exemple.

Aussi, selon un premier mode de réalisation de l'invention illustré à la figure 2, le pivot d'aube 12 est recouvert d'une bague d'insert en deux parties 50a, 50b de type frette constituée d'un alliage métallique choisi parmi des matériaux métalliques à base nickel ou cobalt et le palier lisse en deux parties 52a, 52b est constitué d'un matériau céramique, de préférence de l'alumine (Al2O3) ayant une pureté supérieure à 97%, et de préférence supérieure à 99%.

Le couple céramique alumine /métal à base nickel ou cobalt ainsi obtenu forme une extraordinaire solution anti-usure particulièrement efficace, notamment à haute température. En effet, il est constant que les céramiques dont les caractéristiques anti-usure sont connues pour des contacts homogènes en milieu lubrifié, notamment pour des applications médicales, sont très peu adaptées dans les contacts sans lubrification.

Or, il est apparu avec l'invention que la conductivité de la céramique était suffisamment faible pour que les températures locales de frottement permettent de générer des oxydes d'alliage de nickel ou de cobalt à l'interface céramique/métal jouant ainsi un rôle de lubrifiant sec dans le contact palier/pivot d'aube et évitant une usure prématurée à l'origine de la dégradation du fonctionnement de l'articulation.

Bien entendu, il est aussi possible d'avoir la configuration inverse, illustrée sur la figure 3, avec un dépôt d'alumine (obtenu de préférence par projection plasma) sur le pivot d'aube 12, cette couche de dépôt externe 54 étant directement en contact avec un palier lisse en deux parties 56a, 56b réalisé alors en alliage métallique à base nickel ou cobalt.

Enfin, on peut noter que si le pivot d'aube 12 est constitué d'un matériau métallique à base nickel ou cobalt, la simple utilisation d'un palier lisse en matériau céramique (sans utilisation de frette complémentaire) suffit à assurer le couple céramique/métal recherché pour résoudre le problème posé initialement d'usure de contact en fonctionnement continu sans lubrification liquide. On notera également que si les exemples illustrés montrent des bagues en deux parties (pour une facilité de montage), il est clair que le recours à des bagues mono-corps est tout aussi envisageable.

## Revendications

1. Dispositif de commande d'aube à angle de calage variable dans une turbomachine, comportant une biellette (20), des moyens de liaison (24 ; 32a, 32b) formant articulation entre une première extrémité (20a) de la biellette et un anneau de commande (30), et des moyens de fixation (40, 46) d'une seconde extrémité (20b) de la biellette sur un pivot (12) d'une aube à commander (10), ce pivot d'aube pouvant tourner à l'intérieur d'un palier lisse traversant une partie de corps (18) de la turbomachine, **caractérisé en ce que**, lorsque ledit pivot d'aube est constitué d'un matériau métallique à base nickel ou cobalt, ledit palier lisse (52a, 52b) est constitué d'un matériau céramique.

2. Dispositif selon la revendication 1, **caractérisé en ce que** ledit matériau céramique est de l'alumine.

3. Dispositif selon la revendication 2, **caractérisé en ce que** ladite alumine est pur à au moins 97%.

4. Dispositif selon la revendication 3, **caractérisé en ce que** ladite alumine est pur à au moins 99%.

5. Dispositif selon la revendication 1, **caractérisé en ce que** ledit palier lisse est en deux parties (52a, 52b).

6. Dispositif selon la revendication 1 dans lequel ledit pivot d'aube n'est pas constitué d'un matériau métallique à base nickel ou cobalt, **caractérisé en ce qu'**il comporte en outre une bague d'insert (50a, 50b) constituée d'un matériau métallique à base nickel ou cobalt et frettée sur ledit pivot d'aube.

7. Dispositif selon la revendication 6, **caractérisé en ce que** ladite bague d'insert est en deux parties (50a, 50b).

8. Dispositif selon la revendication 6, **caractérisé en ce que** ladite bague d'insert constituée d'un matériau métallique à base nickel ou cobalt est remplacée par un dépôt (54) d'un matériau céramique sur ledit pivot d'aube et ledit palier lisse constitué d'un matériau céramique est remplacé par un palier lisse (56a, 56b) constitué d'un matériau métallique à base nickel ou cobalt.

9. Dispositif selon la revendication 8, **caractérisé en ce que** ledit matériau céramique est de l'alumine.

10. Dispositif selon la revendication 9, **caractérisé en ce que** ledit dépôt d'alumine est formé par projection plasma.
